# EUROPEAN PATENT SPECIFICATION

(11) **EP 2 853 566 B1**
(45) Date of publication and mention of the grant of the patent: **26.07.2017**
(21) Application number: 13186012.4
(22) Date of filing: 25.09.2013
(51) Int. Cl.: C09D 5/00

(54) **Coated composites**
Beschichtete Verbundstoffe
Composites enrobés

(43) Date of publication of application: 01.04.2015
(73) Proprietor: Crompton Technology Group Ltd., Banbury Oxfordshire OX16 4XD (GB)
(72) Inventor: Giddings, Peter F., Swindon, Wiltshire SN6 7NU (GB)
(74) Representative: Ramsay, Laura Anne

(56) References cited:
- WO-A1-01/05886
- WO-A1-2005/092517
- WO-A2-2007/021493
- US-A1- 2006 269 734
- US-A1- 2007 066 165

## Description

### Technical Field

The present disclosure relates to coated composite materials and methods of manufacturing coated composite materials.

### Background

Composite materials are used to make structural components for a wide range of applications including aerospace and defence, medical imaging, clean energy technology and advanced vehicle technology, e.g. marine, automotive and motorsport. High performance composite products might include transmission shafts, suspension components, fly wheels, prop shafts and drive shafts, hydraulic accumulators and fuel pipes. Composite materials, typically comprising carbon, Kevlar and/or glass fibre reinforcement in a polymer matrix are often selected over traditional metallic materials due to higher specific stiffness and strength. Other desirable properties of composite materials can include tuneable thermal expansion coefficients, resistivity, and their suitability for applications with complex geometries and forms.

US 2007/0066165 discloses a fire protection coating for FRP-reinforced structures. A diffusion barrier is applied over a smoothed layer of vermiculite/gypsum mixture acting as an insulation layer. WO 01/05886 discloses spray-applied thermally protective intumescent compositions. US 2006/0269734 discloses polymeric coatings for fibre reinforced composites. WO 2007/021493 discloses coating aerogel composites with a single layer of a polyorganosiloxane-based coating composition. WO 2005/092517 discloses a single layer of a resin-based coating material for composite components.

Composite materials can provide high specific strength and stiffness but are susceptible to abrasive or erosive wear, as well as offering limited thermal resistance. The limited surface functionality of composite materials can therefore prevent their use in applications where wear resistance or thermal/electrical properties are required. It has been proposed to extend the range of use of composite materials by providing surface coatings that can enhance the surface qualities of a composite substrate to provide properties such as wear resistance, thermal barrier, EMI/RFI shielding, and corrosion protection. In particular, thermal spray coatings are viewed as an attractive method of increasing resistance to high-temperature exposure and wear, whilst minimising the mass added to a composite component.

An advantage of spray coating techniques is that the coating can be applied post manufacture of a composite material so as to provide the composite material with increased functionality. While it is possible to deposit coatings directly onto composite materials using thermal spray coating techniques, such coatings do not exhibit sufficient interface strength due to the low softening point of polymeric resins commonly used as the matrix material and mismatches in elastic modulus and coefficient of thermal expansion. High velocity of the spray particles tending to cause erosion of the composite substrate is also a challenge for deposition of spray coatings. Composite materials such as carbon fibre reinforced polymers (CFRP) and glass fibre reinforced polymers (GFRP) often suffer from significantly lower interface strength of coatings as compared to similar coatings on metallic substrates.

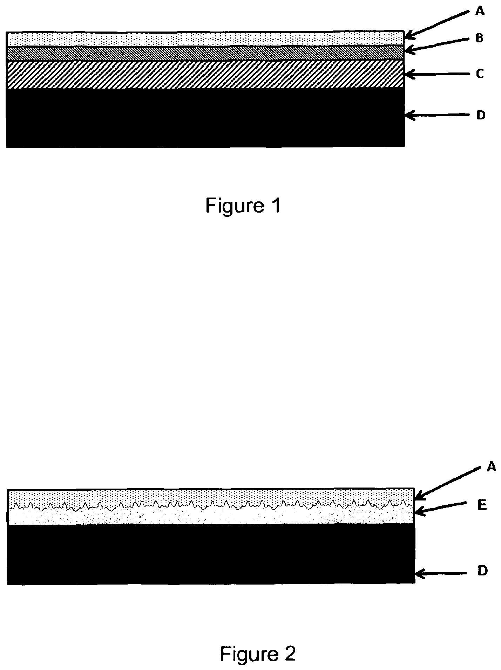

For spray coating processes such as thermal spraying, high interface strength of the coating on a metallic substrate may be achieved by grit blasting the substrate to form a mechanical key. However, the same single step surface preparation is not effective on composite materials. One way of depositing a wear resistant coating, such as a metallic coating, on a composite substrate is the use of multi-layered or graded coatings. For example, there is shown in Figure 1 a thermal spray coating system applied to the surface of a composite substrate D comprising a functional top coat A and intermediate layers B, C. An example progression might be an aluminium layer C followed by a coating of tungsten carbide (WC) B, followed by a wear resistant surface coating such as WC-Co-Cr. One or more of the intermediate layers B, C may be graded according to composition, e.g. increasing carbide content for tungsten carbide coatings, or even graded by density for a fixed composition coating. The intermediate layers B, C can act as thermal and/or mechanical shielding so that the high temperatures and/or high velocities associated with thermal spraying processes do not damage the underlying composite substrate D.

Up until now it has not been possible to directly spray a functional coating layer onto the surface of a polymer composite substrate at the same time as achieving high interface strength. The need for graded coating layers or multiple intermediate layers adds time and complexity to the coating process, and also increases the minimum achievable thickness of surface coatings.

It would be desirable to provide composite materials and coating methods for composite materials which address at least some of the problems outlined above.

### Summary

From a first aspect of this disclosure there is provided a coated composite material comprising: a composite substrate comprising a polymeric matrix with fibre reinforcement; a surface of the composite substrate being coated with (i) a two-phase primer layer comprising a reinforcing phase of material elements bound in a predefined distribution by a polymeric phase and at least partially exposed at an outer surface of the primer layer so as to provide a surface texture, and (ii) a coating layer adhered to the outer surface of the primer layer.

Thus in accordance with this disclosure, a coating layer is not adhered directly to a composite substrate and instead a two-phase primer layer is provided therebetween. The reinforcing phase of material elements being bound in a predefined distribution by the polymeric phase means that the two-phase primer layer can have a consistent and controllable surface texture. The textured outer surface of the primer layer can then provide a mechanical interlock to ensure high interface strength between the coating layer and the substrate. Accordingly processing defects such as delamination can be avoided. A coating layer such as a metallic coating may be reliably adhered to a surface of a composite substrate without the need for multiple intermediate layers or graded layers.

It is believed that the two-phase primer layer with a surface texture provides a greater interface strength between the composite substrate and an applied coating layer than would be achieved through chemical adhesion alone. Furthermore, the surface texture may be tailored so as to optimise the mechanical interlock of a given coating layer material. For example, the depth of the surface texture may be controlled by the predefined distribution of the reinforcing phase so as to determine the mechanical keying that will result in maximum interface strength of the coating layer. The surface texture depth may be tailored to maximise interface strength and control failure mechanisms e.g. delamination for a given coating layer. For example, a texture depth in the range of 1-500 µm may be used for a metallic thermal spray coating, while a texture depth of 10 nm - 1 µm may be used for thin film electro, chemical or vapour deposited coatings.

It will be appreciated that the two-phase primer layer may take many different forms. The surface texture may be approximately homogenous overall, e.g. characterised by a definable texture depth or other texture parameter. In one example the surface texture is approximately homogenous across the outer surface of the two-phase primer layer. This can make it easier to tailor the surface texture to a given coating layer so as to maximise adherence and interface strength, so as to prevent delamination of the coating layer. Moreover, a predictable surface texture can make it easier to optimise coating process parameters when it is known
that a reliable mechanical adherence can be achieved. This means that the coating thickness can be minimised to save on material mass and cost.

It will be appreciated that the surface texture of the two-phase primer layer may be measured or characterised according to any one of several applicable standards. For example, ISO 4287 provides the terms, definitions and surface texture parameters measured by a profile method. Other applicable standards may include ISO 12085, ISO 13565-2 and ISO 13565-3. In addition, ISO 4288 specifies the rules for comparison of the measured values with the tolerance limits for surface texture parameters defined in the previously mentioned standards. ASME B46.1 - 2002 is a corresponding American National Standard that defines surface texture and its constituents (roughness, waviness, and lay) and defines parameters for specifying surface texture.

Even when the surface texture may be approximately homogenous, the reinforcing phase of material elements may be bound in a predefined distribution that is regular or random. Even if the material elements are bound in a random distribution, this can be characterised in advance so that the resulting surface texture is predictable and reliable adhesion of the coating layer will be achieved. In at least some examples, the reinforcing phase of material elements is bound in a predefined distribution so as to provide a two-phase primer layer having a substantially constant thickness. Again, this can contribute to aiding optimisation of relevant process parameters when applying the coating layer. It is also helpful for the two-phase primer layer to have a repeatable thickness, e.g. when making composite materials for multiple components that must be coated within certain tolerance ranges.

In the reinforcing phase of the two-phase primer layer, the material elements are not freely positioned in the polymeric phase but bound in a predefined distribution. In one example, the material elements may be separate elements bound in the predefined distribution. In another example, the material elements may be distinct elements in a continuous reinforcing phase of material, for example provided by a textured or perforated film, net, mesh, lattice, veil or geometric network. The distribution of the material elements is thereby predefined by, for example, a pattern or texture or perforations, or the repeating pattern of a net, mesh, lattice, or veil, or the geometric arrangement of a network. In one set of examples the material elements may be particulate, for example comprising rods, spheres, platelets, or agglomerates, that are bound in a predefined distribution e.g. a geometric network or arrangement. Alternatively, or in addition, the material elements may be fibrous, e.g. comprising continuous, long, short and/or chopped fibres. For such fibrous elements the predefined distribution may be provided by e.g. a mat, scrim, gauze, pad, wad, cloth, textile, woven fabric, or nonwoven fabric. As is mentioned above, the material elements may be randomly distributed in such a mat or fabric etc. but the random distribution can provide a surface texture that is characterisable overall by one or more parameters.

The material elements may consist of any suitable material, including one or more different materials. In one set of examples the material elements of the reinforcing phase may comprise one or more plastics materials. A polymeric material, in particular a high melting point thermoplastic material, may be useful to minimise the weight of the two-phase primer layer. In some examples the material elements may comprise thermoplastic material(s) with a melting point chosen so that the material elements undergo at least a partial phase transition e.g. melting when the coating layer is applied. It is expected that this may contribute to an improvement in interface strength. Alternatively, or in addition, in at least some examples the material elements may comprise one or more non-polymeric materials such as e.g. glass, ceramics, metals, etc.

In the two-phase primer layer, the polymeric phase may comprise any suitable thermoset and/or thermoplastic material as long as it is compatible with the composite substrate and will adequately adhere to a surface thereof. In one example the polymeric phase may consist of thermoset material(s) that is temperature-resistant. In one set of examples the polymeric phase may comprise a film adhesive that functions to attach the reinforcing phase to the composite substrate. In one example the two-phase primer layer may comprise a reinforcing phase of fibrous elements bound in a mat by an adhesive polymeric phase, such as an adhesive film. A suitable film adhesive may comprise a thermoset material, for example chosen from epoxy resins, polyester resins, phenolic resins, Bis-Maleimids (BMI), etc. Alternatively, a suitable film adhesive may comprise a thermoplastic material. A thermoplastic film adhesive may be used as a "welding" layer to allow diffusion bonding between thermoplastic components (rather than joining two dissimilar substances via chemical adhesion) - for example if the reinforcing phase of material elements is polymeric.

The composite substrate may comprise a range of different materials for the polymeric matrix and fibre reinforcement. The polymeric matrix may comprise one or more thermoset and/or thermoplastic materials. In one example, the polymeric matrix consists of thermoset material(s) and the polymeric phase of the primer layer takes the form of an adhesive backing, e.g. an adhesive film compatible with a thermosetting matrix material. Such an adhesive film may be applied by any suitable technique, such as tape wrapping, hand lay-up, etc. In another example, the polymeric matrix consists of thermoplastic material(s) and the polymeric phase of the primer layer consists of one or more compatible thermoplastic materials such that the primer layer can be welded to the composite substrate. Any suitable welding technique, including thermal, induction, ultrasound or other known welding mechanisms, may be used to join the primer layer to a surface of the composite substrate.

The polymeric matrix of the composite substrate may consist of one or more polymeric materials selected from, for example: polyester resins; epoxy resins; phenolic resins; vinyl esters; Bis-Maleimids (BMI); polyether ether ketones (PEEK); poly ether ketone-ketones (PEKK); polyphenylene sulfides (PPS); etc.. The fibre reinforcement may consist of one or more of: glass fibres; carbon fibres; aramid e.g. Kevlar fibres. However it will be appreciated that the present disclosure will find use with a wide range of composite substrate materials.

The coating layer adhered to the outer surface of the two-phase primer layer may of course comprise one or more coating layers. However, it is an advantage of the present disclosure that the two-phase primer layer enables a single coating layer to be adhered to a composite substrate without necessarily requiring multiple intervening layers for reliable deposition of the coating layer to be achieved. The coating layer may comprise any suitable material(s). Coating materials suitable for deposition on a surface of a composite substrate may include metals, alloys, ceramics (such as carbides, metal oxides etc.), and even plastics and composites. A two-phase primer layer according to the present disclosure may be of benefit to any coating layer requiring interface strength higher than that achieved through chemical adhesion alone. Carbide coatings may be chosen to provide hardness and wear resistance. For example, tungsten carbide may be an especially effective wear resistant coating, offering exceptionally high hardness levels (up to 74 HRC hardness). Tungsten carbide is also highly resistant to extreme temperatures up to 650 °C and corrosive environments. Metal oxides such as chromium oxide are also very hard and very resistant to chemical attack, so they may be applied as a coating layer when wear and corrosion are both present. Aluminium oxide and yttria-stabilised zirconia may be used as a coating material. Several metals (such as aluminium, zinc, tungsten, etc.) and even some plastics may also be used to provide a wear resistant coating layer. In one example the coating layer consists of a metallic, ceramic or composite thermal spray coating.

The coating layer(s) may be deposited on the outer surface of the primer layer using any suitable coating technique. In one set of examples, the coating layer(s) may be deposited by a thermal spraying technique. These are coating processes in which the coating material is fed in powder or wire form, optionally heated to a molten or semi-molten state, and particles of the coating material accelerated towards the surface in the form of a spray. Where the coating material is heated, this may be achieved by electrical heating, e.g. plasma or arc heating, or chemical means e.g. combustion flame. Suitable thermal spraying techniques may include, for example, wire arc spraying e.g. twin wire arc spraying (TWAS), high velocity oxy-fuel (HVOF) spraying, plasma spraying, flame spraying, detonation spraying, warm spraying. Usually such thermal spraying processes cannot be used to directly apply a coating layer to a composite substrate due to the low softening point of polymeric resins commonly used as the matrix material and mismatches in elastic modulus and coefficient of thermal expansion. High velocity of the spray particles tending to cause erosion of the composite substrate is also a challenge for deposition of spray coatings. However it is a benefit of the present disclosure that the two-phase primer layer enables the coating layer to adhere to its outer surface without damaging the underlying composite substrate. Alternatively, or in addition, the coating layer may be deposited by one or more other methods such as electroplating, physical vapour deposition, chemical vapour deposition or sputtering.

Mechanical adhesion of the coating layer to the two-phase primer layer may be tested using standard techniques such as a four-point bend test, for example, to test how many cycles in four-point bending can be undergone without delamination of the coating layer. The pull-off strength of a coating layer may be tested using standard methods such as outlined by e.g. ASTM D4541. The Standard ASTM C633-1 provides a standard test method for adhesion or cohesion strength of thermal spray coatings.

According to a second aspect of the present disclosure there is provided a method of manufacturing a coated composite material comprising: providing a composite substrate comprising a polymeric matrix with fibre reinforcement; coating a surface of the composite substrate with a two-phase primer layer comprising a reinforcing phase of material elements bound in a predefined distribution by a polymeric phase such that the reinforcing phase is at least partially exposed at an outer surface of the primer layer so as to provide a surface texture; and depositing a coating layer on said outer surface of the primer layer.

As is already discussed above, such a method enables a coating layer to be consistently and reliably adhered to a surface of a composite substrate via the intervening two-phase primer layer. Such a method may be readily automated to reduce labour and standardise manufacturing processes.

It will be appreciated that the disclosed method may take advantage of any of the materials described above in relation to the composite substrate, two-phase primer layer and/or coating layer.

In one example, the disclosed method may further comprise curing the two-phase primer layer after it has been deposited.

In one example, the disclosed method may further comprise preparing a surface of the composite substrate before the surface is coated with the two-phase primer layer. For example, one or more surfaces of the composite substrate may be machined to precise dimensions if it is not keyed from as-moulded.

The present disclosure also extends to a coated composite material made according to the method(s) disclosed above.

The coated composite materials and manufacturing methods disclosed herein may be used to manufacture a wide range of composite components. Such coated composite materials may be particularly well-suited as multi-functional composites that can provide wear resistance in addition to high specific strength and stiffness. The present disclosure includes components made from a coated composite material, such as actuator cylinders for heavy duty use, automated suspension parts, wear rings, etc. Such coated composite components may find use in heavy duty vehicles, automotives, and actuation, landing gear and other aircraft applications that require wear resistance. The coated composite materials disclosed herein may be used to manufacture any wear resistant composite component, including new components, spare parts and retrofits.

### Brief Description of the Drawings

One or more non-limiting examples will now be described, with reference to the accompanying drawings, in which:
Figure 1 illustrates a cross-section of a coated composite material according to the prior art; and
Figure 2 illustrates a cross-section of an exemplary coated composite material according to the present disclosure.

### Detailed Description

As is already discussed above, Figure 1 illustrates a prior art arrangement of a coated composite material comprising layers A to D. The lowermost composite substrate D is coated with intermediate layers B and C before an upper coating layer A, such as a metallic thermal spray coating, is applied. The intermediate layers B, C may be formed from materials such as aluminium, bronze, silica bronze, copper and its alloys, zinc, zirconium compounds, alumina-based ceramics, silicate-based ceramics, etc. The purpose of the intermediate layers B, C is to provide progressive thermal protection for the lowermost composite substrate D before the top coat A, for example of tungsten carbide, is applied. The intermediate layers B, C may add undesirable thickness to the surface of the composite substrate D.

Figure 2 illustrates a coated composite material according to an example of the present disclosure, wherein a composite substrate D is coated with a two-phase primer layer E before adhering a top coating layer A to the outer surface of the primer layer E. Good adhesion of the top coating layer A is ensured by the two-phase primer layer E having a surface texture, as is shown schematically in the diagram. This surface texture allows a mechanical interlock with the material of the coating layer A so that there is achieved a greater interface strength than would be achieved through chemical adhesion alone. Once the two-phase primer layer E has been applied to a surface of the composite substrate D, the top coating layer A may be deposited using standard techniques such as thermal spraying.

It will be understood that the description above relates to a non-limiting example and that various changes and modifications may be made from the arrangement shown without departing from the scope of this disclosure, which is set forth in the accompanying claims.

## Claims

1. A coated composite material comprising:
a composite substrate comprising a polymeric matrix with fibre reinforcement;
a surface of the composite substrate being coated with:
(i) a two-phase primer layer comprising a reinforcing phase of material elements bound in a predefined distribution by a polymeric phase and at least partially exposed at an outer surface of the primer layer so as to provide a surface texture; and
(ii) a coating layer adhered to said outer surface of the two-phase primer layer.

2. A coated composite material according to claim 1, wherein the surface texture has a depth, determined by the predefined distribution of the reinforcing phase, that is chosen depending on the coating layer.

3. A coated composite material according to claim 1 or 2, wherein the surface texture is approximately homogenous across the outer surface of the two-phase primer layer.

4. A coated composite material according to any preceding claim, wherein the two-phase primer layer has a substantially constant thickness.

5. A coated composite material according to any preceding claim, wherein the reinforcing phase of material elements comprises fibrous elements.

6. A coated composite material according to any preceding claim, wherein the reinforcing phase of material elements comprises one or more plastic materials.

7. A coated composite material according to any preceding claim, wherein the polymeric phase comprises a film adhesive.

8. A coated composite material according to any preceding claim, wherein a single coating layer is adhered to said outer surface of the two-phase primer layer.

9. A coated composite material according to any preceding claim, wherein the coating layer consists of a metallic, ceramic or composite thermal spray coating.

10. A coated composite material according to any preceding claim, wherein the coating layer is deposited on said outer surface by a thermal spraying technique chosen from one or more of: wire arc spraying; high velocity oxy-fuel spraying; plasma spraying; flame spraying; detonation spraying; warm spraying; or cold spraying.

11. A method of manufacturing a coated composite material, the method comprising:
providing a composite substrate comprising a polymeric matrix with fibre reinforcement;
coating a surface of the composite substrate with a two-phase primer layer comprising a reinforcing phase of material elements bound in a predefined distribution by a polymeric phase such that the reinforcing phase is at least partially exposed at an outer surface of the primer layer so as to provide a surface texture; and
depositing a coating layer on said outer surface of the primer layer.

12. A method according to claim 11, further comprising: curing the two-phase primer layer after it has been deposited on a surface of the composite substrate.

13. A method according to claim 11 or 12, further comprising: preparing a surface of the composite substrate before coating the surface with the two-phase primer layer.

14. A coated composite material manufactured according to the method of any of claims 11-13.

15. A composite component made from a coated composite material according to any of claims 1-10 or 14.

## Patentansprüche

1. Beschichteter Verbundwerkstoff, umfassend:
ein Verbundsubstrat, umfassend eine polymere Matrix mit Faserverstärkung;
eine Oberfläche des Verbundsubstrats, die mit Folgendem beschichtet ist:
(i) einer zweiphasigen Grundierungsschicht, die eine Verstärkungsphase aus Materialelementen umfasst, die in einer vordefinierten Verteilung durch eine polymere Phase gebunden ist und zumindest teilweise an einer äußeren Oberfläche der Grundierungsschicht freiliegt, um eine Oberflächenbeschaffenheit bereitzustellen; und
(ii) eine Beschichtungsschicht, die an der äußeren Oberfläche der zweiphasigen Grundierungsschicht anhaftet.

2. Beschichteter Verbundwerkstoff nach Anspruch 1, wobei die Oberflächenbeschaffenheit eine Tiefe aufweist, bestimmt durch die vordefinierte Verteilung der Verstärkungsphase, die je nach Beschichtungsschicht gewählt wird.

3. Beschichteter Verbundwerkstoff nach Anspruch 1 oder 2, wobei die Oberflächenbeschaffenheit annähernd homogen über die äußere Oberfläche der zweiphasigen Grundierungsschicht ist.

4. Beschichteter Verbundwerkstoff nach einem der vorhergehenden Ansprüche, wobei die zweiphasige Grundierungsschicht eine im Wesentlichen konstante Dicke aufweist.

5. Beschichteter Verbundwerkstoff nach einem der vorhergehenden Ansprüche, wobei die Verstärkungsphase aus Materialelementen faserige Elemente umfasst.

6. Beschichteter Verbundwerkstoff nach einem der vorhergehenden Ansprüche, wobei die Verstärkungsphase aus Materialelementen ein oder mehrere Kunststoffmaterialien umfasst.

7. Beschichteter Verbundwerkstoff nach einem der vorhergehenden Ansprüche, wobei die polymere Phase einen Folienklebstoff umfasst.

8. Beschichteter Verbundwerkstoff nach einem der vorhergehenden Ansprüche, wobei eine einzelne Beschichtungsschicht an der äußeren Oberfläche der zweiphasigen Grundierungsschicht haftet.

9. Beschichteter Verbundwerkstoff nach einem der vorhergehenden Ansprüche, wobei die Beschichtungsschicht aus einer thermischen Sprühbeschichtung aus Metall, Keramik oder Verbundwerkstoff besteht.

10. Beschichteter Verbundwerkstoff nach einem der vorhergehenden Ansprüche, wobei die Beschichtungsschicht auf der äußeren Oberfläche durch eine thermische Spritztechnik abgeschieden wird, die aus einem oder mehreren der Folgenden gewählt ist: Drahtbogenspritzen; Hochgeschwindigkeits-Flammspritzen; Plasmaspritzen; Flammspritzen; Detonationsspritzen; Warmspritzen; oder Kaltspritzen

11. Verfahren zum Herstellen eines beschichteten Verbundwerkstoffs, wobei das Verfahren Folgendes umfasst:
Bereitstellen eines Verbundsubstrats, umfassend eine polymere Matrix mit Faserverstärkung;
Beschichten einer Oberfläche des Verbundsubstrats mit einer zweiphasigen Grundierungsschicht, die eine Verstärkungsphase aus Materialelementen umfasst, die in einer vordefinierten Verteilung durch eine polymere Phase gebunden ist, sodass die Verstärkungsphase zumindest teilweise an einer äußeren Oberfläche der Grundierungsschicht freiliegt, um eine Oberflächenbeschaffenheit bereitzustellen; und
Abscheiden einer Beschichtungsschicht auf der äußeren Oberfläche der Grundierungsschicht.

12. Verfahren nach Anspruch 11, ferner umfassend: Aushärten der zweiphasigen Grundierungsschicht, nachdem sie auf einer Oberfläche des Verbundsubstrats abgeschieden worden ist.

13. Verfahren nach Anspruch 11 oder 12, ferner umfassend: Vorbereiten einer Oberfläche des Verbundsubstrats, bevor die Oberfläche mit der zweiphasigen Grundierungsschicht beschichtet wird.

14. Beschichteter Verbundwerkstoff, hergestellt nach dem Verfahren von einem der Ansprüche 11-13.

15. Verbundbauteil, gefertigt aus einem beschichteten Verbundwerkstoff nach einem der Ansprüche 1-10 oder 14.

## Revendications

1. Matériau composite enrobé, comprenant :
un substrat composite comprenant une matrice polymère avec un renforcement fibreux ;
une surface du substrat composite étant enrobée avec :
(i) une couche d'apprêt à deux phases comprenant une phase de renforcement des éléments de matériau liés dans une distribution prédéfinie par une phase polymère et au moins partiellement exposée au niveau d'une surface externe de la couche d'apprêt afin de fournir une texture de surface ; et
(ii) une couche d'enrobage collée à ladite surface externe de la couche d'apprêt à deux phases.

2. Matériau composite enrobé selon la revendication 1, dans lequel la texture de surface a une profondeur, déterminée par la distribution prédéfinie de la phase de renforcement, choisie selon la couche d'enrobage.

3. Matériau composite enrobé selon la revendication 1 ou 2, dans lequel la texture de surface est approximativement homogène à travers la surface externe de la couche d'apprêt à deux phases.

4. Matériau composite enrobé selon une quelconque revendication précédente, dans lequel la couche d'apprêt à deux phases a une épaisseur sensiblement constante.

5. Matériau composite enrobé selon une quelconque revendication précédente, dans lequel la phase de renforcement des éléments de matériau comprend des éléments fibreux.

6. Matériau composite enrobé selon une quelconque revendication précédente, dans lequel la phase de renforcement des éléments de matériau comprend un ou plusieurs matériaux plastiques.

7. Matériau composite enrobé selon une quelconque revendication précédente, dans lequel la phase polymère comprend un film adhésif.

8. Matériau composite enrobé selon une quelconque revendication précédente, dans lequel une couche d'enrobage unique est collée à ladite surface externe de la couche d'apprêt à deux phases.

9. Matériau composite enrobé selon une quelconque revendication précédente, dans lequel la couche d'enrobage est composée d'un revêtement par projection thermique métallique, céramique ou composite.

10. Matériau composite selon une quelconque revendication précédente, dans lequel la couche d'enrobage est déposée sur ladite surface externe par une technique de projection thermique choisie parmi l'une ou plusieurs : de la pulvérisation à l'arc électrique ; de la projection oxycombustible à haute vitesse ; de la projection au plasma ; de la projection à la flamme ; de la projection par détonation ; de la projection à chaud ou de la projection à froid.

11. Procédé de fabrication d'un matériau composite enrobé, le procédé comprenant :
l'utilisation d'un substrat composite comprenant une matrice polymère avec un renforcement fibreux ;
l'enrobage d'une surface du substrat composite avec une couche d'apprêt à deux phases comprenant une phase de renforcement des éléments de matériau liés dans une distribution prédéfinie par une phase polymère de sorte que la phase de renforcement soit au moins partiellement exposée au niveau d'une surface externe de la couche d'apprêt afin de fournir une texture de surface ; et
le dépôt d'une couche d'enrobage sur ladite surface externe de la couche d'apprêt.

12. Procédé selon la revendication 11, comprenant également : le durcissement de la couche d'apprêt à deux phases après son dépôt sur une surface du substrat composite.

13. Procédé selon la revendication 11 ou 12, comprenant également : la préparation d'une surface du substrat composite avant l'enrobage de la surface avec la couche d'apprêt à deux phases.

14. Matériau composite enrobé fabriqué selon le procédé de l'une quelconque des revendications 11 à 13.

15. Composant composite fabriqué à partir d'un matériau composite enrobé selon l'une quelconque des revendications 1 à 10 ou 14.
